Europäisches Patentamt

European Patent Office

Office européen des brevets

(19)

(11) **EP 0 879 732 A1**

(12) **EUROPÄISCHE PATENTANMELDUNG**

(43) Veröffentlichungstag:
25.11.1998 Patentblatt 1998/48

(51) Int. Cl.⁶: **B60L 9/28**

(21) Anmeldenummer: 98108543.4

(22) Anmeldetag: 11.05.1998

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: 22.05.1997 DE 19721450

(71) Anmelder:
**SIEMENS AKTIENGESELLSCHAFT**
**80333 München (DE)**

(72) Erfinder:
**Marquardt, Rainer, Dr. Ing.**
**91074 Herzogenaurach (DE)**

(54) **Trafolose Einspeiseschaltung für ein Wechselstromfahrzeug**

(57)      Die Erfindung bezieht sich auf eine trafolose Einspeiseschaltung für ein Wechselstromfahrzeug. Erfindungsgemäß weist diese trafolose Einspeiseschaltung eingangsseitig zwei Zweipolschaltungen (2,4) und ausgangsseitig einen selbstgeführten Stromrichter (6) mit eingeprägter Spannung ($U_{ZW}$) auf, wobei eine Zweipolschaltung (2) bezüglich der Netzgrundschwingung ($f_N$) kapizitives und die andere Zweipolschaltung (4) induktives Verhalten hat, wobei die beiden Zweipolschaltunge (2,4) eingangsseitig miteinander elektrisch leitend und ausgangsseitig jeweils mit einem Wechselstrom-Anschluß (A,B) des selbstgeführten Stromrichters (6) verknüpft sind und wobei der selbstgeführte Stromrichter (6) zwei Phasenmodule (12) und zwei elektrisch in Reihe geschaltete Kondensatoren ($C_P C_N$) mit geerdeten Verbindungspunkt (14) aufweist. Somit erhält man eine trafolose Einspeiseschaltung für ein Wechselstromfahrzeug, die keinen hohen Stromrichteraufwand und keine hohen Kosten erfordert, und wobei die Isolationsbeanspruchung der Last dieser Einspeiseschaltung halbiert wird.

FIG 1

EP 0 879 732 A1

## Beschreibung

Die Erfindung bezieht sich auf eine trafolose Einspeisung für ein Wechselstromfahrzeug.

Im Aufsatz "Der InterCityExpress mit ABB-Drehstrom-Antriebstechnik", abgedruckt in der DE-Zeitschrift "ABB Technik", Heft 10, 1991, Seiten 3 bis 10, sind Leistungskreise eines ICE-Triebkopfes in Thyristortechnik und GTO-Technik dargestellt. Die Energie für den ICE-Triebkopf wird vom Fahrdraht einphasig mit 15 kV, 16 2/3 Hz bzw. 25 kV, 50 Hz entnommen und über den Weg Stromabnehmer, Hauptschalter und Netzfilter dem Haupttransformator zugeführt. Zur Gewährleistung des autarken Betriebs eines jeden Drehgestells besitzt der Transformator niederspannungsseitig vier weitgehend entkoppelte Traktionswicklungen. Die sich daran anschließenden Vierquadrantensteller als Netzsteller sorgen dafür, daß fast ausschließlich Wirkleistung aus dem Netz entnommen als auch elektrische Bremsenergie als reine Wirkleistung im Netz rückgespeist werden. Weiterhin ist der Vierquadrantensteller für die Aufrechterhaltung der konstanten Zwischenkreis-Gleichspannung von etwa 2800 V, unabhängig von der Belastung, zuständig. Kondensatoren sorgen für ausreichend Glättung der Zwischenkreis-Gleichspannung.

Eine derartige Schaltung wird als trafobehaftete Einspeiseschaltung bezeichnet.

Aufgrund von engen Gewichts- und Volumenbeschränkungen auf dem Wechselstromfahrzeug ist der Transformator jedoch bei weitem nicht so gut ausführbar wie in stationären Anlagen. Die niedrige Netzfrequenz von 16 2/3 Hz verschärft dieses Problem weiter. Ein solcher Transformator hat deshalb einen Wirkungsgrad von typ. ca. 90...92 % und erfordert eine forcierte Ölkühlung und eine große Kühlanlage mit Wärmetauschern zur Umgebungsluft. Die Kühlanlage muß beispielsweise alleine für den Transformator ca. 400 kW Verluste abführen.

Eine kommerzielle Bewertung dieser Energiekosten - ähnlich wie im Energieversorgungsbereich - führt bei 400 kW bei einem kWh-Preis von 0,20 DM/kWh zu mindestens 2,5 Millionen DM bezogen auf die einmaligen Investitionskosten. Die Transformatorkosten selbst und die der Kühlanlage sind zusätzlich zu berücksichtigen.

Im Aufsatz "Influence of the control principle on a high-voltage inverter system for reduction of tractiontransformer weight", abgedruckt in "EPE Aachen", 1989, Seiten 561 bis 566, wird eine Einspeiseschaltung für ein Wechselstromfahrzeug mit 16 2/3 Hz vorgestellt, mit dem das Transformatorgewicht und damit die Größe verringert werden soll. Diese Einspeiseschaltung weist mehrere selbstgeführte Hochspannungs-Stromrichter, die elektrisch in Reihe geschaltet sind, einen Transformator mit mehreren Primärwicklungen und einer Sekundärwicklung und einen als Vierquadrantensteller arbeitenden selbstgeführten Stromrichter auf. Jeder selbstgeführte Hochspannungs-Stromrichter weist vier Phasenmodule auf, die elektrisch parallel geschaltet sind und von denen zwei Phasenmodule elektrisch antiparallel geschaltet sind. Die Phasenausgänge jeweils eines Phasenmoduls und eines antiparallelen Phasenmoduls bilden einen Ausgangsanschluß. Die beiden Ausgangsanschlüsse jedes Hochspannungs-Stromrichters sind mit einer Primärwicklung des Transformators verbunden. Mit dieser Einspeiseschaltung verringert sich das Gewicht des Transformators gegenüber einer 16 2/3 Hz-Ausführung um 32 % bis 37 %. Dies entspricht bei einem 5 MVA-System etwa 3,5 t bis 4 t Gewichtsersparnis.

Um diese Nachteile des Transformators zu vermeiden, gibt es eine Einspeiseschaltung mit einem Mittelfrequenz-Übertrager. Gemäß der EP 0 670 236 A1 weist diese Einspeiseschaltung eingangsseitig mehrere elektrisch in Reihe geschaltete Vierquadrantensteller auf, denen jeweils ausgangsseitig eine Zwischenkreis-Kondensatorbatterie nachgeschaltet sind. Jede Zwischenkreis-Kondensatorbatterie versorgt einen Wechselrichter, der ausgangsseitig mit einer Primärwicklung eines Mittelfrequenz-Übertragers verbunden ist. Jede Sekundärwicklung dieses Mittelfrequenz-Übertragers ist mit einem Vierquadrantensteller verbunden, an deren Ausgängen die Zwischenkreis-Gleichspannung für die Versorgung der stromrichtergespeisten Fahrmotoren des Wechselstromfahrzeugs anstehen.

Bei dieser Einspeiseschaltung wird die hohe Fahrdrahtspannung mittels der in Reihe geschalteten Vierquadrantenstellern in mehreren Teilwechselspannungen unterteilt, die anschließend gleichgerichtet und in eine Wechselspannung mittlerer Frequenz, beispielsweise mehrere kHz, gewandelt werden. Mittels des Übertragers wird diese Wechselspannung mittlerer Frequenz potentialgetrennt und anschließend in die bereits eingangs genannte Zwischenkreis-Gleichspannung umgewandelt. Das heißt, die mehreren elektrischen in Reihe geschalteten Vierquadrantensteller mit ausgangsseitigen Kondensatorbatterien, die mehreren Wechselrichter und der Mittelfrequenz-Übertrager mit mehreren Primär- und Sekundärwicklungen, ersetzen den Netztransformator der eingangs beschriebenen trafobehafteten Einspeiseschaltung.

Dieser extrem hohe Aufwand für die komplexe Stromrichterausrüstung einer trafolosen Einspeiseschaltung führt jedoch zu einer negativen Bewertung bezüglich Kosten und Zuverlässigkeit.

Die Anforderungen an eine geeignete Einspeiseschaltung sind extrem hoch und vielfältig:

- guter Wirkungsgrad (>0,98)
- guter Leistungsfaktor (>0,98) zum Bahnnetz
- nur sehr kleine Oberschwingungsströme im Bahnnetz
- Energierückspeisung ins Bahnnetz bei elektrischer Bremsung des Fahrzeugs
- geringes Gewicht und Volumen
- höchste Zuverlässigkeit und/oder interne Redundanz bei Halbleiterausfällen.

Der Erfindung liegt nun die Aufgabe zugrunde, eine trafolose Einspeiseschaltung für ein Wechselstromfahrzeug anzugeben, die keinen hohen Aufwand und keine hohen Kosten erfordert.

Diese Aufgabe wird erfindungsgemäß mit den Merkmalen des Anspruchs 1 gelöst.

Diese erfindungsgemäße trafolose Einspeiseschaltung weist eingangsseitig zwei Zweipolschaltungen und ausgangsseitig einen selbstgeführten Stromrichter mit eingeprägter Spannung auf. Mittels dieser beiden Zweipolschaltungen, die eingangsseitig elektrisch miteinander und mit einem Stromabnehmer verknüpft sind, werden aus der Fahrdrahtspannung zwei Eingangs-Wechselströme für den selbstgeführten Stromrichter erzeugt. Mittels dieses selbstgeführten Stromrichters mit eingeprägter Spannung wird die gewünschte Gleichspannung zum Betrieb der Antriebswechselrichter des Wechselstromfahrzeugs generiert. Da die zwei elektrischen in Reihe geschalteten Gleichspannungs-Kondensatoren mit einem geerdeten Verbindungspunkt ausgestattet sind, ist die gewünschte Gleichspannung symmetrisch gegen Erdpotential, wodurch die Isolationsbeanspruchung der Antriebswechselrichter, der Motoren und evtl. der Hilfsbetriebe minimiert ist. Von den beiden Zweipolschaltungen hat eine bezüglich der Netzgrundschwingung kapazitives und die andere induktives Verhalten. Dabei entstehen aus der Netzspannung (Fahrdrahtspannung) zwei Ströme für den selbstgeführten Stromrichter.

Bei einer vorteilhaften Ausführungsform der trafolosen Einspeiseschaltung sind als kapazitive Zweipolschaltung eine Kondensatorbatterie und als induktive Zweipolschaltung eine netzgeführte Stromrichterschaltung vorgesehen, die wenigstens zwei Substromrichter aufweist, die wechselstromseitig elektrisch in Reihe geschaltet sind. Jeder Substromrichter weist zwei Phasenmodule und einen zu diesen elektrisch parallel geschalteten Kondensator auf. Die Phasenmodule der Substromrichter weisen Thyristoren auf, wogegen die Phasenmodule des selbstgeführten Stromrichters mit eingeprägter Spannung abschaltbare Leistungshalbleiterschalter aufweisen.

Mittels dieser vorteilhaften Ausführungsform der transformatorlosen Einspeiseschaltung wird die Steuerung der abgegebenen bzw. aufgenommenen Gleichstromleistung mittels eines Aussteuergrades und/oder eines Phasenwinkels der beiden Eingangs-Wechselspannungen des selbstgeführten Stromrichters gesteuert. Beide Stromrichter werden mit einfachen Steuerverfahren gesteuert, die keine hohen Pulsfrequenzen benötigen. Beispielsweise ist die Grundschwingungstaktung, d.h. Pulsfrequenz gleich Netzfrequenz, möglich. Dadurch können leistungsschwächere Leistungshalbleiterschalter verwendet werden oder bei der Verwendung von herkömmlichen Phasenmodulen beim selbstgeführten Stromrichter infolge einer geringeren Verlustleistung eine höhere Leistung auf- und abgeben werden.

Da die Leistungshalbleiterschalter der Phasenmodule der beiden Stromrichter und die Kondensatoren jeweils ein hohes Innovationspotential aufweisen, wird sich das Bauvolumen und das Gewicht in der Zukunft noch wesentlich verringern. Gegenüber der bekannten Einspeiseschaltung weist die erfindungsgemäße trafolose Einspeiseschaltung ein geringeres Bauvolumen und ein geringeres Gewicht auf. Außerdem weist die erfindungsgemäße Einspeiseschaltung einen wesentlich höheren Wirkungsgrad auf. Bei Ausfall eines Leistungshalbleiterschalters im netzgeführten Stromrichter fällt die trafolose Einspeiseschaltung nicht aus, sondern lediglich die Kurvenform des induktiven Stromes weicht von der Sinusform etwas stärker ab. Das heißt, die interne Redundanz bei Leistungshalbleiterausfällen ist sehr hoch.

Zur weiteren Erläuterung der Erfindung wird auf die Zeichnung Bezug genommen, in der eine Ausführungsform der erfindungsgemäßen trafolosen Einspeiseschaltung schematisch veranschaulicht ist.

FIG 1          zeigt ein Prinzipschaltbild einer trafolosen Einspeiseschaltung für ein Wechselstromfahrzeug gemäß der Erfindung, in
FIG 2          ist ein Zeigerbild des Prinzipschaltbildes der erfindungsgemäßen Einspeiseschaltung nach FIG 1 dargestellt, die
FIG 3          zeigt eine Ausführungsform der Zweipolschaltung, die bezüglich der Netzgrundschwingung induktiv ist, in den
FIG 4 bis 7    sind jeweils in einem Diagramm über die Zeit t die Signalverläufe der Ausführungsform gemäß Figur 3 dargestellt und die
FIG 8          zeigt eine vorteilhafte Ausführungsform der Zweipolschaltung, die bezüglich der Netzgrundschwingung kapazitiv ist.

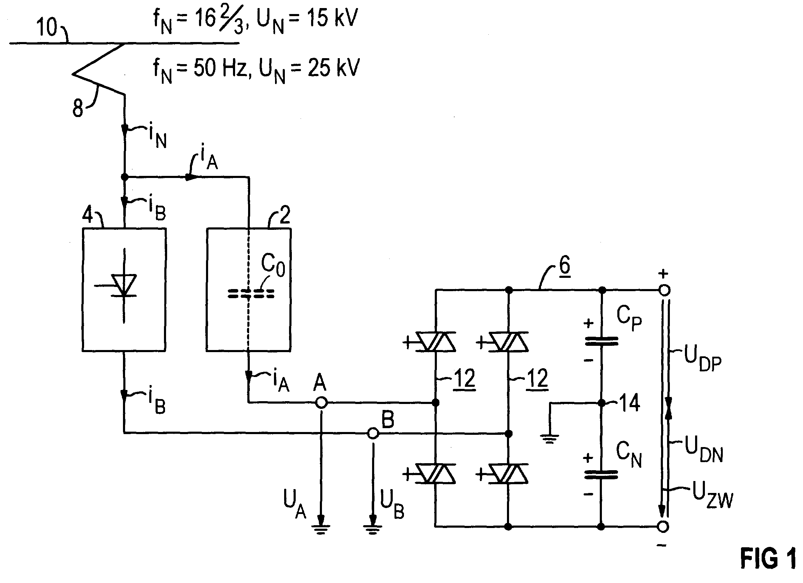

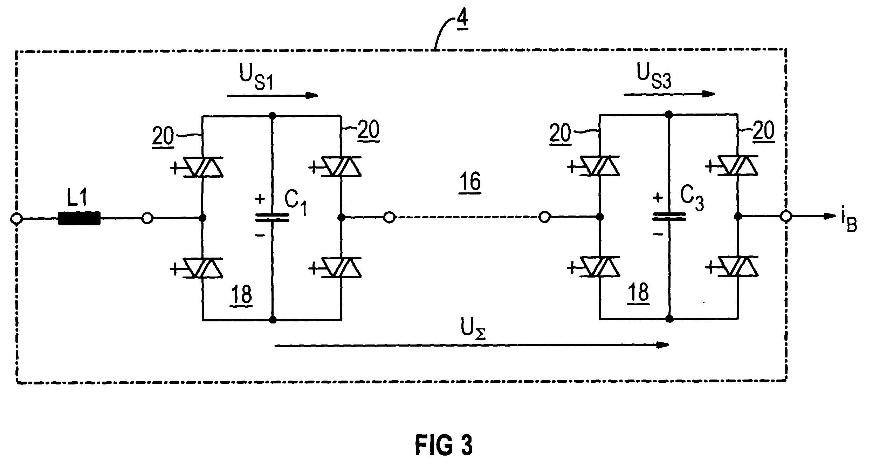

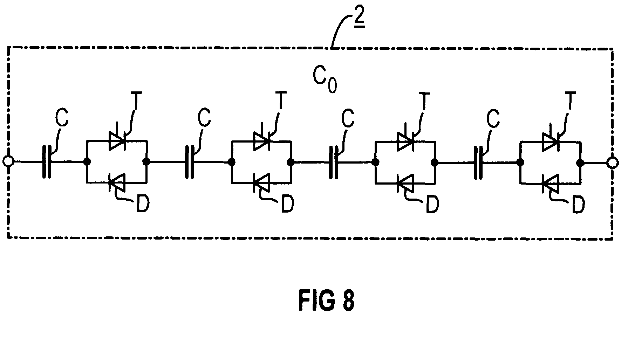

Die FIG 1 zeigt ein Prinzipschaltbild einer erfindungsgemäßen trafolosen Einspeiseschaltung für ein Wechselstromfahrzeug. Diese trafolose Einspeiseschaltung weist zwei Zweipolschaltungen 2 und 4 und einen selbstgeführten Stromrichter 6 mit eingeprägter Spannung $U_{ZW}$ auf. Die beiden Zweipolschaltungen 2 und 4 sind eingangsseitig miteinander elektrisch leitend verbunden und gemeinsam mit einem Stromabnehmer 8 des Wechselstromfahrzeugs elektrisch leitend verknüpft. Mittels dieses Stromabnehmers 8 kann Energie vom Fahrdraht 10 entnommen bzw. zugeführt werden. Ausgangsseitig ist die Zweipolschaltung 2 mit einem ersten Wechselstrom-Anschluß A des selbstgeführten Stromrichters 6 verknüpft, wogegen die Zweipolschaltung 4 mit einem zweiten Wechselstrom-Anschluß B dieses Stromrichters 6 verbunden ist. Eine vorteilhafte Ausführungsform der Zweipolschaltung 2, die bezüglich der Netzgrundschwingung $f_N$ kapazitiv ist, ist in der FIG 8 dargestellt, wogegen eine Ausführungsform der Zweipolschaltung 4, die bezüglich der Netzgrundschwingung $f_N$ induktiv ist, in FIG 3 näher veranschaulicht ist.

Der selbstgeführte Stromrichter 6 mit eingeprägter Spannung $U_{ZW}$ weist zwei Phasenmodule 12 und zwei elektrisch in Reihe geschaltete Kondensatoren $C_P$ und $C_N$ auf, wobei der Verbindungspunkt 14 dieser beiden Kondensatoren $C_P$ und $C_N$ geerdet ist. Jedes Phasenmodul 12 weist als Leistungshalbleiterschalter abschaltbare Thyristoren auf, die jeweils mit einer Freilaufdiode versehen sind. Derartige Phasenmodule 12 werden seit Jahren bei Traktionsantrieben verwendet (eingangs genannter Aufsatz). Die beiden in Reihe geschalteten Kondensatoren $C_P$ und $C_N$ sind diesen Phasenmodulen 12 elektrisch parallel geschaltet. Zwischen den Gleichspannungs-Anschlüssen "+" und "-" steht die eingeprägte Gleichspannung $U_{ZW}$ an. Diese Gleichspannung $U_{ZW}$ setzt sich aus zwei Gleichspannungen $U_{DP}$ und $U_{DN}$ symmetrisch gegen Erdpotential zusammen. Mittels dieser Gleichspannungen $U_{DP}$ und $U_{DN}$ halbiert sich die Isolationsbeanspruchung der Antriebswechselrichter, der Motoren und evtl. der Hilfsbetriebe eines herkömmlichen Umrichters eines Wechselstromfahrzeugs (eingangs genannter Aufsatz).

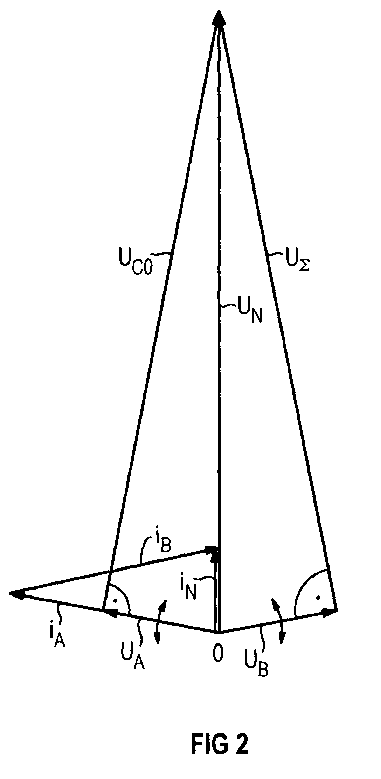

Die Signale Fahrdrahtspannung $U_N$, auch als Netzspannung $U_N$ bezeichnet, Fahrdrahtstrom $i_N$, auch als Netzstrom $i_N$ bezeichnet, kapazitiver Zweipolstrom $i_A$, induktiver Zweipolstrom $i_B$ und Eingangs-Wechselspannungen $U_A$ und $U_B$ bezüglich Erdpotential der erfindungsgemäßen trafolosen Einspeiseschaltung sind in dem Zeigerdiagramm gemäß FIG 2 für einen Betriebspunkt dargestellt. Diesem Zeigerbild ist zu entnehmen, daß ein Großteil der Netzspannung $U_N$ an der kapazitiven und induktiven Zweipolschaltung 2 und 4 abfällt. Jeweils verbleibende Spannungen $U_A$ und $U_B$ bilden jeweils eine Eingangs-Wechselspannung des selbstgeführten Stromrichters 6. Dem Zeigerbild ist ebenfalls zu entnehmen, daß der Zeiger Netzstrom $i_N$ und der Zeiger Netzspannung $U_N$ einen Winkel von 0° el. einschließen, d.h. der Leistungsfaktor cos $\varphi$ ist Eins. Somit wird reine Wirkleistung vom Fahrdraht 10 entnommen. Die Zeiger für die Eingangs-Wechselspannung $U_A$ und $U_B$ sind jeweils mit einem Doppelpfeil versehen. Damit soll angedeutet werden, daß diese Zeiger um den Ursprung 0 des Zeigerdiagramms gedreht werden können. Mittels der Drehung der Zeiger $U_A$ und $U_B$ in Richtung des Zeigers Netzspannung $U_N$ nimmt die vom Fahrdraht 10 aufgenommene Wirkleistung ab, bis die Zeiger Eingangs-Wechselspannung $U_A$ und $U_B$ und Netzspannung $U_N$ zusammenfallen. In diesem Zustand ist der Netzstrom $i_N$ = 0, d.h. die trafolose Einspeiseschaltung befindet sich im Leerlauf.

Mit dieser erfindungsgemäßen trafolosen Einspeiseschaltung kann auch Energie an den Fahrdraht 10 gegeben werden. In diesem Rückspeisezustand ist dann der Zeiger Netzstrom $i_N$ dem Zeiger Netzspannung $U_N$ entgegengesetzt. Auch im Rückspeisezustand kann die an den Fahrdraht 10 gegebene Wirkleistung mittels der Steuerung des Phasenwinkels und/oder des Aussteuergrades eingestellt werden.

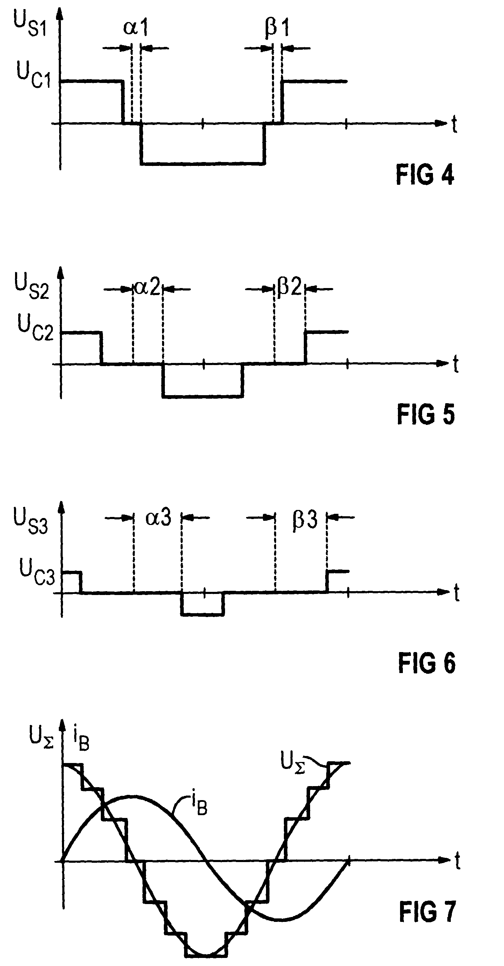

Die FIG 3 zeigt eine Ausführungsform der Zweipolschalter 4, die bezüglich der Netzgrundschwingung $f_N$ induktiv ist. Als induktive Zweipolschaltung 4 ist eine netzgeführte Stromrichterschaltung 16 vorgesehen. Diese netzgeführte Stromrichterschaltung 16 weist wenigstens zwei Substromrichter 18 auf, die wechselstromseitig elektrisch in Reihe geschaltet sind. Jeder Substromrichter 18 weist zwei Phasenmodule 20 und einen Kondensator C1 bzw. C2 bzw. C3 auf. Dieser Kondensator C1 bzw. C2 bzw. C3 ist elektrisch parallel zu den beiden Phasenmodulen 20 geschaltet. Zwischen den Wechsel-Anschlüssen jedes Substromrichters 18 fällt eine Spannung $U_{S1}$ bzw. $U_{S2}$ bzw. $U_{S3}$ ab. Die Spannungsverläufe dieser Spannungen $U_{S1},...U_{S3}$ sind in den FIG 4 bis 6 jeweils in einem Diagramm über der Zeit t dargestellt. Diesen Verläufen ist zu entnehmen, daß durch unterschiedliche Steuerwinkel $\alpha1$, $\alpha2$, $\alpha3$, $\beta1$, $\beta2$ und $\beta3$ die Spannungsaufteilung $U_{C1}$, $U_{C2}$, $U_{C3}$ und der Leistungsfaktor cos $\varphi$ zur Netzseite hin eingestellt werden. Mittels dieser Steuerung der Substromrichter 18 der netzgeführten Stromrichterschaltung 16 kann die gewünschte, fast sinusförmige Spannung $U_{\Sigma}$ (FIG 7) eingestellt werden. Zur Begrenzung von Oberschwingungsströmen, die durch die Substromrichter 18 entstanden sind, ist eingangsseitig dieser Zweipolschaltung 4 eine sehr kleine Induktivität L1 zugeordnet. Durch geschickte Auswahl der Steuerwinkel $\alpha1$, ..., $\alpha n$ und $\beta1$, ..., $\beta n$ und der Anzahl der Substromrichter 18 kann der Oberschwingungsanteil vermindert werden. Das heißt, man verwendet feste Pulsmuster, die hinsichtlich der Oberschwingungen optimiert sind. Da jeder Substromrichter 18 pro Halbperiode nur einmal angesteuert wird, spricht man bei diesem Steuerverfahren von einer Grundfrequenztaktung.

In der FIG 8 ist eine vorteilhafte Ausführungsform der Zweipolschaltung 2 dargestellt, die bezüglich der Netzgrundschwingung $f_N$ kapazitiv ist. Als kapazitive Zweipolschaltung 2 ist eine Kondensatorbatterie $C_0$ vorgesehen, deren Kondensatoren C jeweils elektrisch in Reihe mit einem Thyristor T geschaltet sind. Jedem Thyristor T ist eine Freilaufdiode D antiparallel geschaltet. Anstelle der konventionellen Thyristoren T können auch lichtzündbare Thyristoren verwendet werden. Mittels der Verwendung der Thyristoren T lassen sich die Kondensatoren C dieser Kondensatorbatterie $C_0$ beim Start der trafolosen Einspeiseschaltung besser vorladen, und die Einspeiseschaltung kann nach Betriebsstörungen (z.B. durch Netzkurzschlüsse u.a. Vorfälle im Netz) durch Sperre der Zündimpulse aller Thyristoren in beiden Zweipolen elektrisch "vom Netz getrennt" werden. Es verbleiben nach dieser elektronischen "Netztrennung" funktional nur die Dioden und Kondensatoren als wirksame Überspannungsbegrenzung am Netz. Letzteres ist sehr vorteilhaft.

## Patentansprüche

1. Trafolose Einspeiseschaltung für ein Wechselstromfahrzeug, die eingangsseitig zwei Zweipolschaltungen (2,4) und ausgangsseitig einen selbstgeführten Stromrichter (6) mit eingeprägter Spannung ($U_{ZW}$) aufweist, wobei eine Zweipolschaltung (2) bezüglich der Netzgrundschwingung ($f_N$) kapazitives und die andere Zweipolschaltung (4) induktives Verhalten hat, wobei die beiden Zweipolschaltungen (2,4) eingangsseitig miteinander elektrisch leitend und ausgangsseitig jeweils mit einem Wechselstrom-Anschluß (A,B) des selbstgeführten Stromrichters (6) verknüpft sind und wobei der selbstgeführte Stromrichter (6) zwei Phasenmodule (12) und zwei elektrisch in Reihe geschaltete Kondensatoren ($C_P C_N$) mit geerdetem Verbindungspunkt (14) aufweist.

2. Trafolose Einspeiseschaltung nach Anspruch 1, wobei als kapazitive Zweipolschaltung (2) eine aus mehreren Kondensatoren (C) aufgebaute Kondensatorbatterie ($C_0$) vorgesehen ist.

3. Trafolose Einspeiseschaltung nach Anspruch 1, wobei als induktive Zweipolschaltung (4) eine netzgeführte Stromrichterschaltung (16) vorgesehen ist, die wenigstens zwei Substromrichter (18) aufweist, die wechselstromseitig elektrisch in Reihe geschaltet sind.

4. Trafolose Einspeiseschaltung nach Anspruch 3, wobei jeder Substromrichter (18) zwei Phasenmodule (20) und einen elektrisch parallel geschalteten Kondensator (C1, C2, C3...) aufweist.

5. Trafolose Einspeiseschaltung nach Anspruch 2, wobei jeweils einem Kondensator (C) der Kondensatorbatterie ($C_0$) ein Thyristor (T) mit antiparallel geschalteter Freiluftdiode (D) elektrisch in Reihe geschaltet ist.

6. Trafolose Einspeiseschaltung nach Anspruch 1, wobei jedes Phasenmodul (12) des selbstgeführten Stromrichters (6) abschaltbare Leistungshalbleiterschalter aufweist.

7. Trafolose Einspeiseschaltung nach Anspruch 4, wobei jedes Phasenmodul jedes Substromrichters (18) zwei Thyristoren aufweist.

8. Trafolose Einspeiseschaltung nach Anspruch 7, wobei als Thyristor ein lichtzündbarer Thyristor verwendet wird.

9. Trafolose Einspeiseschaltung nach Anspruch 6, wobei als abschaltbarer Leistungshalbleiterschalter ein abschaltbarer Thyristor vorgesehen ist.

10. Trafolose Einspeiseschaltung nach Anspruch 6, wobei als abschaltbarer Leistungshalbleiterschalter ein IGBT vorgesehen ist.

FIG 1

**FIG 2**

FIG 3

FIG 4

FIG 5

FIG 6

FIG 7

**FIG 8**

Europäisches
Patentamt

**EUROPÄISCHER RECHERCHENBERICHT**

Nummer der Anmeldung

EP 98 10 8543

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,A | EP 0 670 236 A (SIEMENS AG) 6. September 1995 <br> * Zusammenfassung; Abbildung 1 * <br> --- | 1-10 | B60L9/28 |
| D,A | SCHMIDT D: "DER INTERCITYEXPRESS MIT ABB-DREHSTROM-ANTRIEBSTECHNIK" ABB TECHNIK, Bd. 10, 1991, Seiten 3-10, XP002045944 <br> * das ganze Dokument * <br> --- | 1 | |
| A | GUIGNARD R ET AL: "EUROPAEISCHE STANDARD-REISEZUGWAGEN - VOM PROTOTYP ZUM SERIENWAGEN.EUROPEAN STANDARD PASSENGER COACHES - FROM PROTOTYPE TO STANDARD MODEL" ZEITSCHRIFT FUR EISENBAHNWESEN UND VERKEHRSTECHNIK. DIE EISENBAHN TECHNIK + GLASERS ANNALEN, Bd. 100, Nr. 6, Juni 1976, Seiten 187-191, XP002017187 <br> * Seite 189; Abbildung 4 * <br> --- | 1 | |
| A | MARQUARDT R: "HIGH POWER GTO CONVERTERS FOR THE NEW GERMAN HIGH SPEED TRAIN ICE" PROCEEDINGS OF THE EUROPEAN CONFERENCE ON POWER ELECTRONICS AND APPLICATIONS. (EPE), AACHEN, 9 - 12 OCTOBER, 1989, Bd. VOL. 2, Nr. CONF. 3, 9. Oktober 1989, Seiten 583-587, XP000143451 LEONHARD W;HOLTZ J; SKUDELNY H C <br> * Seite 585; Abbildung 1 * <br> --- | 1 | RECHERCHIERTE SACHGEBIETE (Int.Cl.6) <br> B60L |

-/--

Der vorliegende Recherchenbericht wurde für alle Patentansprüche erstellt

| Recherchenort | Abschlußdatum der Recherche | Prüfer |
|---|---|---|
| DEN HAAG | 25. August 1998 | Beyer, F |

EPO FORM 1503 03.82 (P04C03)

| Europäisches Patentamt | EUROPÄISCHER RECHERCHENBERICHT | Nummer der Anmeldung EP 98 10 8543 |
|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,A | S. ÖSTLUND : "INFLUENCE OF THE CONTROL PRINCIPLE ON A HIGH-VOLTAGE INVERTER SYSTEM FOR REDUCTION OF TRACTION-TRANSFORMER WEIGHT" EPE 89, Oktober 1989, Seiten 561-566, XP002075383 Aachen * Abbildung 1 * | 1 | |

**RECHERCHIERTE SACHGEBIETE (Int.Cl.6)**

Der vorliegende Recherchenbericht wurde für alle Patentansprüche erstellt

| Recherchenort | Abschlußdatum der Recherche | Prüfer |
|---|---|---|
| DEN HAAG | 25. August 1998 | Beyer, F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
                            
& : Mitglied der gleichen Patentfamilie, übereinstimmendes Dokument

EPO FORM 1503 03.82 (P04C03)